## Europäisches Patentamt

## European Patent Office

## Office européen des brevets

(11) Publication number: **0 043 563**

**B1**

(12) **EUROPEAN PATENT SPECIFICATION**

(45) Date of publication of patent specification: **16.01.85**

(51) Int. Cl.⁴: **B 60 C 9/20**

(21) Application number: **81105150.7**

(22) Date of filing: **02.07.81**

(54) Annular reinforcing structure of radial tires.

(30) Priority: **08.07.80 IT 2329780**

(43) Date of publication of application:
**13.01.82 Bulletin 82/02**

(45) Publication of the grant of the patent:
**16.01.85 Bulletin 85/03**

(84) Designated Contracting States:
**BE DE FR GB LU NL**

(56) References cited:
**AT-A- 335 863**
**DE-C- 970 651**
**FR-A-2 120 421**
**FR-A-2 229 563**
**FR-A-2 429 681**
**GB-A-1 472 745**
**LU-A- 76 739**
**US-A-4 172 487**

(73) Proprietor: **SOCIETA' PNEUMATICI PIRELLI S.p.A.**
**Piazzale Cadorna 5**
**I-20123 Milano (IT)**

(72) Inventor: **Canevari, Cesare**
**Via S. Martino 11A**
**Milano (IT)**
Inventor: **Signorini, Aldo**
**Via Toscana 11**
**Monza, (Milano) (IT)**

(74) Representative: **Gernhardt, Claus, Dipl.-Ing. et al**
**Dr. Elisabeth Jung Dr. Jürgen Schirdewahn Dipl.-Ing. Claus Gernhardt Patentanwälte**
**Clemensstrasse 30**
**D-8000 München 40 (DE)**

Courier Press, Leamington Spa, England.

EP 0 043 563 B1

## Description

The present invention relates to an annular reinforcing structure inserted between carcass and tread in a radial tire.

As it is known, in radial tires the annular reinforcing structures comprise various metallic cord layers the cords of which in each layer lying parallel to one another and are suitably inclined with respect to the equatorial plane. The cords are embedded in elastomeric material, and each cord comprises a plurality of threads or wires twisted or stranded together.

These structures although satisfying in general the various exercise conditions of a tire, constitute unfortunately a great part of the cost of a finished tire, mainly due to the machinery and the relative process for the stranding of the threads or wires.

There is no doubt that the use of monofilaments, i.e. straight solid wires in place of the cords would permit to reduce the high production costs of the tire as a consequence of the stranding operations.

However, owing to the existence of great prejudices and to objective processing difficulties, it has been found that the transition from the theoretical use to the practical use of monofilaments in annular reinforcing layers between the carcass and the tread is seriously hampered.

Indeed it is thought that the cords due to their arrangement of mutual winding, in practice as many springs with very open turns offer a great deformability without breaking under repeated bending with respect to a single wire having equal cross section.

Consequently reinforcing layers formed by cords are used bearing the higher cost and renouncing to examine whether the use of monofilaments can produce improved performances as regards, for example the road holding or the comfort. This is confirmed, for example, by US—A—4 172 487 which shows in a radial tire an annular reinforcing structure between the carcass and the tread, said annular reinforcing structure comprising two main reinforcing layers of inextensible steel cords, the cords of each layer being parallel to one another and inclined at an angle comprised between 10° and 30° with respect to the direction of the equatorial plane of the tire, and the cords of one layer crossing those of the other layer. Between the said main reinforcing layers there is provided an intermediate reinforcing layer comprising helically formed filaments parallel to one another, each of said filaments consisting of one or preferably a plurality of helically formed steel wires. The said helically formed filaments have an extension which is greater than the extension of the steel cords of the main reinforcing layers. Therefore also here the helically formed filaments are not used to replace the usual inextensible steel cords.

Therefore the present invention aims to provide a radial tire having an annular reinforcing structure between the tread and the carcass without any of the cited drawbacks.

The object of the present invention is a radial tire comprising a carcass, a tread and an annular reinforcing structure between the carcass and the tread, said annular reinforcing structure comprising at least two reinforcing layers of steel elements, said steel elements of each layer being parallel to one another and inclined at an angle comprised between 10° and 30° with respect to the direction of the equatorial plane of the tire, the steel elements of one layer crossing those of the adjacent layer characterized by the fact that said steel elements are straight formed wires, and that said carcass at the crown point having a radius of curvature on the meridian plane equal to or greater than 400 mm.

The cited value of the radius of curvature, hereinafter called transversal radius, is to be considered critical since at values below this limit, the obtained tires show inadequate fatigue resistance.

When the tire comprises a transversal radius equal to or greater than the critical value, it has been found that the monofilaments of the reinforcing layers although varying the bending state in the transition from the inside to the outside of the area of contact with the ground, remain subjected owing to the predetermined curvature variation corresponding to the selected radius, to stresses in particular compression stresses within acceptable limits.

Moreover it can be thought that only low heating occurs in exercise in the elastomeric material of a tire according to the present invention with respect to a conventional tire, i.e. with an annular structure comprising cords and having the same transversal curvature.

In the case of conventional tires the metallic cords of the annular reinforcing structure are subjected continuously to variations of the curvature consequent to variations of the transversal curvature. As a consequence of the compression stresses said metallic cords tend to assume transversal dimensions greater with respect to the mutual position of maximum compactness since the movements of relative drawing away are favoured, and as a consequence of tensile stresses said metallic cords tend to return to the position of maximum compactness.

In its turn the elastomeric material embedding the cords is obliged to follow said settling variations for an indefinite number of cycles and it undergoes a certain heating; as it can be understood, this situation does not happen in tires according to the invention.

Consequently it can be thought that the hysteresis of the elastomeric material in the tires according to the invention is less than that of the conventional tires with the advantages of a more constant behaviour of the compound with the characteristics thereof being more similar to those chosen at the beginning, in particular in relation to long runs and to roads with irregular bed.

Preferably the tire is characterized by the fact that said monofilaments have a diameter comprised between 0.08 and 0.50 mm.

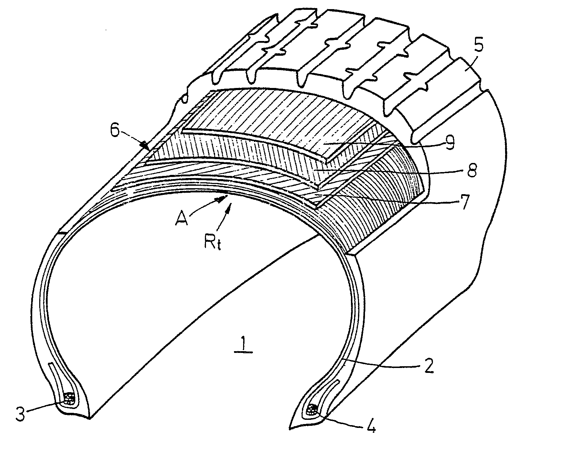

Anyhow, the present invention will be explained on the basis of the accompanying drawing in which by way of example a radial tire according to the invention is represented in transversal section.

The invention is now described with regard to a tire 1 comprising a radial carcass with a reinforcing ply 2 turned up at the ends around bead cores 3, 4, a tread 5, and an annular reinforcing structure 6 inserted between the carcass 2 and the tread 5.

The annular reinforcing structure 6 comprises a first layer 7 of steel monofilaments parallel to one another and inclined at an angle comprises between 10° and 30° with respect to the direction of the equatorial plane of the tire 1, and over it a second layer 8 of steel monofilaments parallel to one another and inclined at an angle of equal value and opposite sign with respect to that of the monofilaments of the first layer 7.

In a preferred embodiment the annular reinforcing structure can comprise an outer third layer 9 of textile cords which become reduced in length when subjected to heat, for example nylon cords which extend in essence parallel to the equatorial plane.

The carcass 2 has a predetermined curvature according to a choice of the transversal radius Rt, here defined as radius of curvature at the crown point A of the carcass meridian profile, i.e. the point located at the intersection of the meridian plane with the equatorial plane.

This radius Rt has a value not lower than 400 mm, for example of 600 mm.

The monofilaments of the layers 7 and 8 are of high carbon content steel (for example 0.7%) covered outside by a film of brass or bronze or other alloys suitable to favour the adhesion with the elastomeric material embedding said monofilaments.

The diameter of each monofilament can vary in the range of values comprised between 0.08 and 0.50 mm, with preferred values between 0.17 and 0.40 mm, for example 0.25 mm.

The monofilaments have a specific tensile strength of at least 2000 N/mm$^2$, a modulus of elasticity of 205,000 N/mm$^2$, an elongation of 1.4% for a stress equal to 100% of the tensile strength.

The tires comprising the above said characteristics have for example a longitudinal radius of curvature of the carcass in the equatorial plane equal to 240 mm.

The indicated tires have demonstrated a suitable fatigue resistance, and improved characteristics have been ascertained with respect to tires for the same use, but with reinforcing layers comprising metallic cords inserted between the carcass and the tread.

For example, with the tires according to the invention it has been noted with respect to conventional tires a greater area of contact better defined at the contour thereof with consequent improved road holding in relation to the stresses perpendicular to the equatorial plane of the running tire, for example when the tire runs along a curved trajectory.

Also, a better comfort can be achieved with the present tires. Although not disregarding all the involved variables falling within the complicated phenomena relating to the use of the tire, it can be thought that the obtained favourable results depend on the fact that with the same resistant section the reinforcing layers comprising monofilaments have a thickness smaller than that of cord layers, determining therefore with equal load a greater deformability of the tire with a consequent greater area of contact and with a sensible attenuation of the forces transmitted by the irregularities of the ground to the running vehicle.

Although a particular embodiment of the invention has been described, it is understood that the invention includes in its scope any other alternative embodiment accessible to a technician of the field.

## Claims

1. Radial tire comprising a carcass, a tread and an annular reinforcing structure (6) between the carcass and the tread, said annular reinforcing structure (6) comprising at least two reinforcing layers (7, 8) of steel elements, said steel elements of each layer being parallel to one another and inclined at an angle comprised between 10° and 30° with respect to the direction of the equatorial plane of the tire, the steel elements of one layer crossing those of the adjacent layer, characterized by the fact that said steel elements are straight formed wires, and that said carcass at the crown point (A) having a radius (Rt) of curvature on the meridian plane equal to or greater than 400 mm.

2. Radial tire as in claim 1, characterized by the fact that said straight formed wires have a diameter comprised between 0,08 and 0,50 mm.

## Revendications

1. Pneumatique radial comprenant une carcasse, une bande de roulement et une structure de renforcement annulaire (6) disposée entre la carcasse et la bande de roulement, ladite structure de renforcement annulaire (6) comportant au moins deux couches (7, 8) d'éléments en acier, lesdits éléments en acier de chaque couche étant parallèles les uns aux autres et inclinés selon un angle compris entre 10° et 30° par rapport à la direction du plan équatorial du pneumatique, les éléments en acier d'une couche croisant ceux de la couche adjacente, caractérisé en ce que lesdits éléments en acier sont constitués par des fils droits, et en ce que ladite carcasse présente, en son sommet (A), un rayon de courbure (Rt) dans le plan méridien qui est égal ou supérieur à 400 mm.

2. Pneumatique selon la revendication 1, caractérisé en ce que lesdits fils droits ont un diamètre compris entre 0,08 et 0,50 mm.

### Patentansprüche

1. Radialreifen mit einer Karkasse, einem Laufstreifen und einem ringförmigen Verstärkungsgebilde (6) zwischen der Karkasse und dem Laufstreifen, wobei das ringförmige Verstärkungsgebilde (6) wenigstens zwei Verstärkungslagen (7, 8) aus Stahlelementen aufweist, die Stahlelemente jeder Lage zueinander parallel und zur Richtung der Äquatorialebene des Reifens in einem Winkel zwischen 10° und 30° schräg verlaufen, und wobei die Stahlelemente einer Lage diejenigen der benachbarten Lage kreuzen, dadurch gekennzeichnet, daß die Stahlelemente gerade geformte Drähte sind, und daß die Karkasse am Kronenpunkt (A) einen Krümmungsradius (Rt) an der Meridianebene hat, der gleich oder größer als 400 mm ist.

2. Radialreifen nach Anspruch 1, dadurch gekennzeichnet, daß die gerade geformten Drähte einen Durchmesser zwischen 0,08 und 0,50 mm haben.